# EUROPÄISCHE PATENTSCHRIFT

(11) **EP 3 026 170 B1**
(45) Veröffentlichungstag und Bekanntmachung des Hinweises auf die Patenterteilung: **15.02.2017**
(21) Anmeldenummer: 15003277.9
(22) Anmeldetag: 18.11.2015
(51) Int. Cl.: D06F 67/04, B65H 5/02

(54) **VERFAHREN ZUM SORTIEREN VON WÄSCHESTÜCKEN, INSBESONDERE SCHMUTZWÄSCHESTÜCKEN**
METHOD FOR SORTING LAUNDRY, IN PARTICULAR DIRTY LAUNDRY ITEMS
PROCEDE DE TRI DE PIECES DE LINGE, NOTAMMENT DE PIECES DE LINGE SALE

(30) Priorität: 26.11.2014 DE 102014017478
(43) Veröffentlichungstag der Anmeldung: 01.06.2016
(73) Patentinhaber: Herbert Kannegiesser GmbH, 32602 Vlotho (DE)
(72) Erfinder: Sielermann, Jürgen, 73540 Heubach (DE); Bringewatt, Wilhelm, 32457 Porta Westfalica (DE); Heinz, Engelbert, 32602 Vlotho (DE)
(74) Vertreter: Möller, Friedrich

(56) Entgegenhaltungen:
- EP-A1- 2 789 730
- EP-A2- 2 113 606
- DE-A1- 4 330 911

## Beschreibung

Die Erfindung betrifft ein Verfahren zum Sortieren von Wäschestücken, insbesondere Schmutzwäschestücken, gemäß dem Oberbegriff des Anspruchs 1.

Wäschestücke, insbesondere zu waschende Schmutzwäschestücke, oder zu finishende Wäschestücke, werden nach der Anlieferung in einer Wäscherei sortiert, damit sie gezielt gewaschen, gefinisht oder in sonstiger Weise behandelt werden können (siehe DE 43 30 911 A1). können.

Die Wäschestücke, und zwar vor allem Schmutzwäschestücke, werden üblicherweise postenweise in beispielsweise Wäschesäcken oder Wäschecontainer angeliefert. Die Wäschestücke müssen deshalb vor dem Sortieren vereinzelt werden. Das geschieht vielfach manuell.

Das an das Vereinzeln anschließende Sortieren erfolgt anhand von Informationen, die sich aus der Geometrie, Größe, Farbe und/oder der Gewebeart des Schmutzwäschestücks ergeben können. Andere Informationen werden von einer Bedienungsperson von den Wäschestücken abgeleitet, beispielsweise manuell mit einem Lesegerät von einem Informationsträger des Wäschestücks übernommen.

Diese vorstehend genannten Tätigkeiten zum Sortieren sind personal- und zeitaufwendig.

Der Erfindung liegt die Aufgabe zugrunde, ein Verfahren zum Sortieren von Wäschestücken, insbesondere Schmutzwäschestücken, zu schaffen, das weitestgehend, vorzugsweise vollständig, automatisiert ist.

Ein Verfahren zur Lösung der vorstehend genannten Aufgabe weist die Maßnahmen des Anspruchs 1 auf. Dieses Verfahren zeichnet sich dadurch aus, dass ein Oberflächenprofil, insbesondere eine Topografie, des jeweiligen Wäschestücks des angelieferten Wäschepostens ermittelt wird und anhand dieses Oberflächenprofils bzw. der Topografie eine Stelle des Wäschestücks ermittelt wird, an der es von einem Erfassungsmittel des Transportsystems erfasst werden kann und/oder soll. An dieser Stelle wird dann vom Erfassungsmittel das Wäschestück gezielt erfasst. Hierbei kommt es zu einer automatischen Vereinzelung des Wäschestücks aus dem Wäschehaufen.

Eine vorteilhafte Ausgestaltungsmöglichkeit des Verfahrens sieht es vor, das Erfassungsmittel mit mindestens einer schnellen Servoachse an eine vom aufgenommenen Oberflächenprofil bzw. der aufgenommenen Topografie des Wäschestücks ermittelten signifikanten Stelle heranzufahren. Eine solche schnelle Servoachse kann beispielsweise durch einen elektrisch oder pneumatisch betriebenen Linearantrieb wie beispielsweise einem Pneumatikzylinder oder einen elektro-motorisch betriebenen Zahnstangentrieb gebildet sein. Mit solchen Linearantrieben lassen sich recht hohe Beschleunigungen und Geschwindigkeiten und damit kurze Transferzeiten realisieren. Das führt vor allem mit der durch bildgebende Verfahren ermittelten, insbesondere errechneten, Position der bevorzugt zu ergreifenden Stelle des Wäschestücks zu kurzen Taktzeiten.

Bevorzugt kann das Verfahren weitergebildet sein durch aus dem aufgenommenen Oberflächenprofil bzw. der aufgenommenen Topografie des Wäschestücks errechneten Position einer zum Erfassen desselben vorgesehenen oder geeigneten Stelle. Diese Position kann dann vom Erfassungsmittel gezielt gesteuert angefahren werden, insbesondere an mindestens einer schnellen Servoachse zum Verfahren des Erfassungsmittels. Auch hierdurch sind kurze Taktzeiten und hohe Sortierleistungen realisierbar.

Gemäß einer anderen Möglichkeit zur bevorzugten Weiterbildung des Verfahrens ist es vorgesehen, das Oberflächenprofil bzw. die Topografie des jeweiligen Wäschestücks von mindestens einer Kamera, vorzugsweise mehreren Kameras, an verschiedenen Stellen stereoskopisch aufzunehmen. Auf diese Weise kann ein dreidimensionales Abbild des jeweiligen Wäschestücks vor dem Vereinzeln und/oder nach dem Vereinzeln aufgenommen werden. Durch eine elektronische Bildbearbeitung kann eine besonders leicht zu ergreifende Stelle, vorzugsweise eine solche Stelle, wo das Wäschestück eine signifikante Krümmung aufweist, aber auch andere charakteristische Merkmale des gesamten Wäschestücks oder zumindest eines repräsentanten Teils desselben, automatisch ermittelt werden.

Bevorzugt ist es vorgesehen, dass anhand des aufgenommenen Oberflächenprofils, also der Topografie, aus dem dreidimensionalen Bild des Wäschestücks ermittelt werden kann, wo sich eine begünstigte oder die gesuchte Stelle zum Greifen des Wäschestücks vom Erfassungsmittel befindet, und die Position dieser Stelle insbesondere in dreiachsigen Koordinaten errechnet werden kann. Nach dem daraufhin vom Erfassungsmittel gezielten Ergreifen oder Ansaugen des Wäschestücks kann dieses aus dem Wäschehaufen herausgezogen und dabei gezielt vereinzelt werden.

Das Verfahren kann so ausgebildet sein, dass vorzugsweise nach dem Vereinzeln eines Wäschestücks von einer bildgebenden Einrichtung das Wäschestück gegebenenfalls zusammen mit der Ermittlung der Topografie bzw. des Oberflächenprofils desselben bildhaft aufgenommen wird und aus dem so erhaltenen Abbild des Wäschestücks mindestens ein Sortierkriterium des Wäschestücks ermittelt bzw. abgeleitet wird. Es lassen sich so zumindest einige Sortierkriterien des Wäschestücks auf einfache Weise automatisch zuverlässig feststellen, ohne dass es dazu einer Bedienungsperson bedarf.

Bevorzugt können vom durch die bildgebende Einrichtung aufgenommenen Abbild des Wäschestücks, insbesondere wenn es sich um ein farbiges dreidimensionales Abbild handelt, die Gestalt, die Größe, die Struktur bzw. Gewebeart und/oder die Farbe des Wäschestücks ermittelt werden und dadurch mindestens ein Teil der Sortierkriterien des Wäschestücks abgeleitet werden.

Weiterhin kann das Verfahren so ausgebildet sein, dass vor dem Transfer oder während des Transfers des Wäschestücks an einem Haltemittel des Transportsystems das Wäschestück von der bildgebenden Einrichtung bildhaft aufgenommen wird. Diese Stelle eignet sich besonders für mindestens ein Abbild des Wäschestücks, woraus mindestens ein Sortierkriterium abgeleitet wird. Alternativ oder zusätzlich kann das von der bildgebenden Einrichtung aufgenommene Abbild dazu dienen, den Transfervorgang des Wäschestücks an das Haltemittel des Transportsystems zu beeinflussen, insbesondere zu steuern oder zu regeln. So wird eine zuverlässigere automatische Übergabe des Wäschestücks von der Vereinzelungsstation zum nachfolgenden Transportsystem geschaffen.

Besonders vorteilhaft ist es, das von der bildgebenden Einrichtung aufgenommene Abbild des Wäschestücks zu verwenden, um mindestens einige Sortierkriterien des Wäschestücks zu ermitteln und den Transfervorgang des Wäschestücks zum Transportsystem zu steuern bzw. zu regeln. Das führt zu einer nennenswerten Erhöhung der Sortierleistung, weil die zum Sortiervorgang gehörenden Vorbereitungen der Wäschestücke, insbesondere der Schmutzwäschestücke, nicht nur vollautomatisch, sondern infolge der Automatisierung auch mit kurzen Taktzeiten erfolgen können.

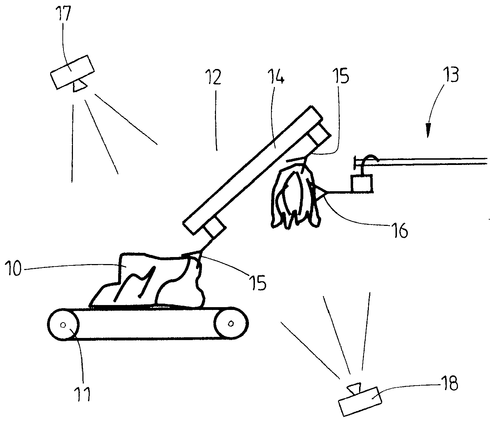

Die Erfindung wird nachfolgend anhand der Zeichnung näher erläutert. Die einzige Figur der Zeichnung zeigt schematisch einen Teil einer Vorrichtung zum Sortieren von insbesondere Schmutzwäschestücken, nämlich die Schmutzwäschevorbereitung für die Sortierung.

In dieser Beschreibung wird davon ausgegangen, dass es sich bei den zu sortierenden Wäschestücken um Schmutzwäschestücke handelt, die in einer Wäscherei angeliefert worden sind. Die Schmutzwäschestücke 10 werden zunächst sortiert, bevor sie gewaschen, getrocknet und gegebenenfalls gemangelt und/oder gefaltet werden. Bei den Schmutzwäschestücken 10 kann es sich um sogenannte Formteile wie zum Beispiel Tischwäsche, Bettwäsche oder dergleichen handeln, aber auch um Formteile wie Bekleidungsstücke, insbesondere Berufsbekleidungsstücke. Die Schmutzwäschestücke 10 werden üblicherweise unsortiert in Wäschesäcken oder auch Wäschecontainern in der Wäscherei angeliefert.

Im gezeigten Ausführungsbeispiel wird ein Haufen mehrerer Schmutzwäschestücke 10 aus beispielsweise einem Wäschesack von einem Förderer, und zwar in der Figur einem Gurtförderer 11, einer Sortierstation zugeführt. Von der Sortierstation ist in der Figur nur ein vorderer Teil, das heißt der Anfang, gezeigt. Hierbei handelt es sich um eine Vereinzelungseinrichtung 12 und einen sich daran anschließenden Anfang eines Transportsystems 13, das vereinzelte Schmutzwäschestücke 10 zu den passenden Abwurfstellen der Sortierstation transportiert und durch Abwurf an der dem Sortierkriterium des jeweiligen Schmutzwäschestücks 10 entsprechenden Abwurfstelle sortiert.

Der Haufen mehrerer üblicherweise zusammengeknüllter, gegebenenfalls auch ineinander verschlungener Schmutzwäschestücke 10 wird vom Gurtförderer 11 in den Einflussbereich der Vereinzelungseinrichtung 12 transportiert und von einer Klammer 14 der Vereinzelungseinrichtung 12 ergriffen und dabei vereinzelt. Die gezeigte Vereinzelungseinrichtung 12 verfügt über eine geradlinige und schräg ansteigende längliche Schiene 14, an der im gezeigten Ausführungsbeispiel zwei zur Vereinzelung dienende Klammern 15 verfahrbar sind. Die beiden Klammern 15 ergreifen abwechselnd ein Schmutzwäschestück 10 aus dem noch auf dem Gurtförderer 11 liegenden Haufen mehrere Schmutzwäschestücke 10. Während eine Klammer 15 am unteren Endbereich der Schiene 14 ein Schmutzwäschestück 10 ergreift, übergibt die andere Klammer 15 am oberen hinteren Endbereich ein vereinzeltes Schmutzwäschestück 10 an eine Klammer 16 des Transportsystems 13.

Der Vereinzelungseinrichtung 12 ist eine bildgebende Einrichtung zugeordnet, die das Oberflächenprofil bzw. die Topografie des sich an der Vereinzelungsstelle befindenden Haufens mehrerer Schmutzwäschestücke 10 ermittelt. Diese bildgebende Einrichtung verfügt über mindestens eine in der Figur andeutungsweise dargestellte Kamera 17. Vorzugsweise verfügt die bildgebende Einrichtung über zwei oder mehr als zwei Kameras 17, die an unterschiedlichen Stellen angeordnet sind, um ein dreidimensionales Bild des Haufens mehrerer Wäschestücke 10 stereoskopisch aufzunehmen bzw. zu erzeugen. Das von den vorzugsweise mehreren Kameras 17 aufgenommene Bild vom Oberflächenprofil bzw. Topografie des Haufens mehrerer Schmutzwäschestücke 10 wird dann in einer Bildverarbeitung elektronisch ausgewertet, indem ein dreidimensionales Oberflächenmodell von mindestens einem signifikanten Teil des Schmutzwäschestücks 10 ermittelt wird. Daraus wird das am besten zu ergreifende Schmutzwäschestück 10 ermittelt und von diesem diejenige Stelle detektiert, die sich zum Ergreifen durch die Klammer 15 am besten eignet. Eine solche Stelle zeichnet sich durch einen kleinen Krümmungsradius bzw. eine markante Krümmung bzw. einen großen Krümmungsgradienten aus. Bevorzugt verfügt das zum Vereinzeln ausgewählte Schmutzwäschestück 10 an der detektierten Stelle über eine Falte, einen Knick, eine Kante oder eine Ecke.

An der durch die Bilderfassung und Bildauswertung ermittelten Stelle ergreift die Klammer 15 der Vereinzelungseinrichtung 12 das aus dem Haufen mehrerer Schmutzwäschestücke 10 herauszuziehende nächste Schmutzwäschestück 10. Durch Hochfahren längs der Schiene 14 wird das ergriffene Schmutzwäschestück 10 aus dem Haufen herausgezogen und dabei vereinzelt.

Das vereinzelte Schmutzwäschestück 10 wird von der Klammer 15 längs der Schiene 14 hochgefahren bis zum oberen Endbereich der Schiene 14. Dort hängt das einzelne Schmutzwäschestück 10, das von der Klammer 15 an einer beliebigen Stelle ergriffen worden ist, von der Klammer 15 herunter.

Eine weitere bildgebende Einrichtung erfasst das Oberflächenprofil bzw. die Topografie des von der Klammer 15 am oberen Endbereich der Schiene 14 herunterhängenden Schmutzwäschestücks 10. In der Figur ist schematisch nur eine Kamera 18 der bildgebenden Einrichtung zur Erfassung des von der Klammer 15 herunterhängenden Schmutzwäschestücks 10 dargestellt. Hier kann eine einzelne Kamera 18 ausreichen, um einen signifikanten Teil des Oberflächenprofils des Schmutzwäschestücks 10, vorzugsweise eine Seite desselben, zu erfassen. Es ist auch denkbar, dass von mehreren vorzugsweise gleichen Kameras 18 stereoskopisch auch hier ein dreidimensionales Oberflächenmodell, insbesondere die Topografie, des von der Klammer 15 herunterhängenden Schmutzwäschestücks 10 ermittelt wird. Bevorzugt handelt es sich bei den Kameras 18 oder auch nur der einzigen Kamera 18 um eine ein farbiges Abbild des Schmutzwäschestücks 10 erstellende Kamera 18.

Von der mindestens einen Kamera 18 werden nicht nur das Oberflächenprofil bzw. die Topografie des Schmutzwäschestücks 10 unter der Klammer 15 ermittelt, sondern auch mindestens ein für das Sortieren relevante Sortierkriterium. Es kann sich hierbei um das Profil bzw. die Gestalt, die Größe, die Farbe und/oder die Oberflächenstruktur des Gewebes des von der Klammer 15 herunterhängenden Schmutzwäschestücks 10 handeln.

Anhand des von der mindestens einen Kamera 18 aufgenommenen Oberflächenprofils bzw. der Topografie des an der Klammer 15 hängenden Schmutzwäschestücks 10 kann auch diejenige Stelle ermittelt werden, die für das Ergreifen des Schmutzwäschestücks 10 von der Klammer 16 des Transportsystems 13 besonders geeignet ist. Hierbei kann es sich um eine beliebige Stelle des Schmutzwäschestücks 10 handeln, gegebenenfalls aber auch eine signifikante Stelle, beispielsweise eine Kante oder eine Ecke des Schmutzwäschestücks 10. Das Schmutzwäschestück 10 wird an dieser Stelle von der Klammer 16 des Transportsystems 13 ergriffen und längs des Transportsystems 13 zur dem Sortierkriterium entsprechenden Abwurfstelle zur Durchführung der Sortierung transportiert.

Es ist denkbar, dem Transportsystem 13 bzw. der Klammer 16 desselben eine Wägeeinrichtung zuzuordnen, die das Gewicht des an der Klammer 16 hängenden Schmutzwäschestücks 10 ermittelt.

Das erfindungsgemäß Verfahren wird nachfolgend unter Bezugnahme auf die Figur der Zeichnung näher erläutert:
Die in der Wäscherei angelieferten Schmutzwäschestücke 10 werden posten- bzw. haufenweise der Vereinzelungseinrichtung 12 vom Gurtförderer 11 dem Anfang der Sortierstation zugeführt. Dabei gelangt ein Haufen unsortierter, zusammengeknüllter und gegebenenfalls miteinander verschlungener Schmutzwäschestücke 10 zur Vereinzelungseinrichtung 12.

Von vorzugsweise mehreren Kameras 17 wird ein dreidimensionales Bild mit der Oberflächenstruktur bzw. Topografie des Haufens der Schmutzwäschestücke 10 auf dem Gurtförderer 11 aufgenommen und hieraus Daten eines dreidimensionalen Oberflächenmodells des Schmutzwäschestücks 10 errechnet. Es wird der Haufen mehrerer Schmutzwäschestücke 10 aus mindestens zwei verschiedenen Blickwinkeln von den mindestens zwei Kameras 17 bildhaft aufgenommen. Dadurch erscheint ein dreidimensionales Abbild des Haufens der Schmutzwäschestücke 10, wodurch drei Raumkoordinaten bestimmbar sind. Dazu werden die dreidimensionalen Koordinaten X, Y und Z eines jeden Punkts oder einiger Punkte auf der Oberfläche des Haufens und/oder eines einzelnen Schmutzwäschestücks 10 errechnet. Das dadurch entstehende dreidimensionale Abbild der Oberflächenstruktur bzw. der Topografie des Haufens der Schmutzwäschestücke 10 wird mit einer Bildauswertung elektronisch weiterverarbeitet, vorzugsweise mit einem nicht dargestellten Computer, Daten des dreidimensionalen Oberflächenmodells errechnet und vorzugsweise auch abgespeichert.

Die Kameras 17 können zur Bestimmung des Oberflächenprofils bzw. der Topografie der Schmutzwäschestücke 10 kontinuierlich Bilder aufnehmen. Es ist aber auch denkbar, dass Bilder in regelmäßigen Zeitabständen aufgenommen werden. Entscheidend ist, dass vor dem Ergreifen eines Schmutzwäschestücks 10 aus dem Haufen die Topografie bzw. das Oberflächenprofil des als nächstes zu ergreifenden und zu vereinzelnden Schmutzwäschestücks 10 feststehen.

Nachdem durch die Bildverarbeitung die Topografie bzw. das Oberflächenprofil sichtbar sich im Haufen befindender Schmutzwäschestücke 10 bestimmt ist, wird ein sich besonders zum Greifen geeignetes Schmutzwäschestück 10 bestimmt und von diesem Schmutzwäschestück 10 eine solche Stelle ermittelt, die für das Erfassen bzw. Vereinzeln besonders geeignet ist. Es handelt sich dabei bevorzugt um eine solche Stelle, an der das Schmutzwäschestück 10 einzeln zuverlässig erfasst und aus dem Haufen mehrerer Schmutzwäschestücke 10 herausgezogen werden kann. Besonders eignet sich eine solche Stelle des Schmutzwäschestücks 10, die einen kleinen Krümmungsradius, also eine ausgeprägte Krümmung und/oder einen großen Krümmungsgradienten, aufweist, beispielsweise eine Falte, ein Knick, eine Kante und/oder eine Ecke des Schmutzwäschestücks 10. Zur Bestimmung der genannten Stelle wird durch die Bildverarbeitung die Topografie bzw. das Oberflächenprofil des von den Kameras 17 aufgenommenen Abbilds des Haufens der Schmutzwäschestücke 10, insbesondere des bevorzugt zu ergreifenden Wäschestücks 10, derart ausgewertet, dass von jeweils benachbarten Punkten der Winkel zwischen zwei Tangenten bzw. tangentialen Ebenen dieser Punkte ermittelt wird. Ist dieser Winkel beispielsweise flach, hat das Schmutzwäschestück 10 an dieser Stelle einen großen Krümmungsradius. Ist hingegen der Winkel spitz oder schneiden sich die Tangenten gar nicht, so ist von einem geringen Krümmungsradius auszugehen, also eine solche Stelle, die sich zum Vereinzeln des Schmutzwäschestücks 10 eignet.

Von der Stelle des Schmutzwäschestücks 10, die sich besonders gut zum Erfassen desselben eignet, werden die von der Bildauswertung, insbesondere einem Computer, elektronisch ermittelten bzw. errechneten Koordinaten der zum Ergreifen besonders geeigneten Stelle an eine Steuerung der Klammer 15 übertragen. Von dieser Steuerung wird die Klammer 15 dann genau an die von der Bildverarbeitung bzw. Bildauswertung ermittelte und errechnete Stelle ihres Schmutzwäschestücks 10 mit ihrer schnellen Servoachse herangefahren.

Werden anhand des ermittelten Oberflächenprofils oder der Topografie des Schmutzwäschestücks 10 mehrere Stellen ermittelt, die sich zum Erfassen eignen, findet eine Wertung statt, welche Stelle am besten geeignet ist, insbesondere von der Klammer 15 auf dem kürzesten Weg und/oder am schnellsten anfahrbar ist.

Gegebenenfalls kann es vorgesehen sein, eine spezielle Stelle, wie beispielsweise eine Kante oder eine Ecke des Schmutzwäschestücks 10, zu detektieren. Zu dieser Detektion kann in der Bildverarbeitungseinrichtung bzw. Auswertungseinrichtung, beispielsweise einen Computer, eine Bibliothek abgespeichert sein, die eine Vielzahl von aufgenommenen signifikanten Stellen, insbesondere Ecken bzw. Kanten, der von den Kameras 17 aufgenommenen Bilder vorangegangener Schmutzwäschestücke 10 enthält, und hiermit ein Abgleich erfolgt.

Nachdem von der Klammer 15 der Vereinzelungseinrichtung 12 die von der mindestens einen Kamera 17 und Bildauswertung ermittelte bzw. errechnete bevorzugte Stelle das Schmutzwäschestück 10 ergriffen worden ist, wird die Klammer 15 mit einer schnellen Servoachse längs der Schiene 14 hochgefahren und dabei das von ihr gehaltene Schmutzwäschestück 10 aus dem Haufen mehrerer Schmutzwäschestücke 10 herausgezogen und so vereinzelt. Nachdem die Klammer 15 mit dem vereinzelten Schmutzwäschestück 10 an der Schiene 14 hochgefahren ist in die Endposition an gegenüberliegenden Enden der Schiene 14, ist das Schmutzwäschestück 10 soweit aus dem Haufen herausgezogen, dass es frei von der Klammer 15 nach unten hängt. Hier findet eine Übergabe des Schmutzwäschestücks 10 von der Klammer 15 an die Klammer 16 des Transportsystems 13 statt. An dieser Übergabestelle wird von mindestens einer Kamera 17 das Schmutzwäschestück 10 auch bildhaft aufgenommen, so dass ein Abbild desselben entsteht. Es kann an dieser Übergabestelle reichen, ein nur zweidimensionales Abbild des Schmutzwäschestücks 10 aufzunehmen. Bevorzugt wird aber auch an der Übergabestelle des Schmutzwäschestücks 10 von der Klammer 15 durch die Klammer 16 des Transportsystems 13 stereoskopisch ein dreidimensionales Bild, und zwar vorzugsweise ein Farbbild, aufgenommen, das Rückschlüsse auf das Oberflächenprofil bzw. die Topografie des an der Klammer 15 hängenden Schmutzwäschestücks zulässt. Es kann so eine Stelle des Schmutzwäschestücks 10 detektiert werden, die sich besonders gut zum Transfer des Schmutzwäschestücks 10 an das Transportsystem 13, insbesondere zum Ergreifen durch die Klammer 16, eignet.

Von der mindestens einen Kamera 18 wird auch wenigstens ein Sortierkriterium des Schmutzwäschestücks 10 ermittelt. Ein oder auch mehrere Sortierkriterien lassen sich auch von einem zweidimensionalen Abbild des Schmutzwäschestücks 10 an der Übergabestelle zur Klammer 16 ableiten. Bei den Sortierkriterien kann es sich um die Gestalt des Schmutzwäschestücks 10 handeln. Beispielsweise kann so festgestellt werden, ob das Schmutzwäschestück 10 ein Formteil (zum Beispiel Bekleidungsstück) oder ein Flachwäscheteil (beispielsweise ein Bettlaken) ist. Des Weiteren können alternativ oder zusätzlich die Größe des Schmutzwäschestücks 10, die Oberflächenstruktur des Schmutzwäschestücks 10, insbesondere des Gewebes, ermittelt werden, woraus zum Beispiel die Gewerbeart des Schmutzwäschestücks 10 bekannt wird. Wenn die mindestens eine Kamera 18 eine Farbkamera ist, kann das von dieser aufgenommene Bild auch Aufschlüsse über die Farbe des Schmutzwäschestücks 10 liefern, insbesondere kann so festgestellt werden, ob es sich um ein Buntwäschestück handelt. Alternativ oder zusätzlich ist es denkbar, aus dem mindestens einen aufgenommenen Abbild des Schmutzwäschestücks 10 zu ermitteln, ob dieses Fehler, beispielsweise Löcher, oder Flecken bzw. starke Verschmutzungen aufweist. Solche Wäschestücke können dann aussortiert werden.

Nachdem das Schmutzwäschestück 10 von der mindestens einen Kamera 18 zwei- oder dreidimensional bildhaft erfasst ist, wird das Schmutzwäschestück 10 an der durch eine entsprechende Bildauswertung ermittelten Stelle von der Klammer 16 des Transportsystems 13 ergriffen und abtransportiert. Die Bildauswertung ermittelt diese Stelle genauso, wie das im Zusammenhang mit der Kamera 17 an der Vereinzelungsstelle beschrieben worden ist. Gegebenenfalls kann das Gewicht des Schmutzwäschestücks 10 im an der Klammer 16, aber auch an der Klammer 15 hängenden Zustand ermittelt werden. Daraus lässt sich ein weiteres Sortierkriterium ableiten.

Die Ermittlung der Topografie bzw. des Oberflächenprofils des Schmutzwäschestücks 10 mit der mindestens einen Kamera 18 kann alternativ auch erfolgen, nachdem das Schmutzwäschestück 10 von der Klammer 16 des Transportsystems 13 ergriffen worden ist und von dieser Klammer 16 herunterhängt.

Das jeweils an der Klammer 16 hängende Schmutzwäschestück 10 wird vom Transportsystem 13 an den einzelnen Abwurfstellen vorbeitransportiert und dabei an derjenigen Abwurfstelle von der Klammer 16 gelöst, also abgeworfen, die dem vorher durch die Bilderfassung und Auswertung ermittelten Sortierkriterium oder gegebenenfalls auch einer Kombination mehrerer Sortierkriterien, entspricht. Dabei kommt es zum sortierten Abwerfen des Schmutzwäschestücks 10 vom Transportsystem 13, wobei das Schmutzwäschestück 10 in einem Behälter oder auch einem Förderer landet, der für die dem mindestens einen Sortierkriterium entsprechenden Schmutzwäschestücke 10 vorgesehen ist.

In der vorstehend beschriebenen Weise werden nach und nach einzelne Schmutzwäschestücke 10 aus dem Haufen mehrerer Schmutzwäschestücke 10 vereinzelt und nachfolgend sortiert. Infolge der Verarbeitung und der Auswertung der von den Kameras 17 und 18 aufgenommenen Bilder, vorzugsweise dreidimensionaler Oberflächenprofile bzw. Topografien, wird sowohl der Vereinzelungsvorgang als auch mindestens ein Teil der Sortierung automatisiert, lassen sich also vollautomatisch durchführen.

### Bezugszeichenliste:

- 10: Schmutzwäschestück
- 11: Gurtförderer
- 12: Vereinzelungseinrichtung
- 13: Transportsystem
- 14: Schiene
- 15: Klammer
- 16: Klammer
- 17: Kamera
- 18: Kamera

## Patentansprüche

1. Verfahren zum Sortieren von Wäschestücken, insbesondere Schmutzwäschestücken (10), wobei aus einem angelieferten Wäscheposten Wäschestücke einzeln entnommen und das jeweilige Wäschestück an ein Transportsystem (13) übergeben wird, das das Wäschestück zu einer Sortierstation transportiert, wo das Wäschestück anhand von dazugehörenden Informationen an eine mindestens ein Sortierkriterium des Wäschestücks entsprechende Abwurfstelle vom Transportsystem (13) abgegeben wird, **dadurch gekennzeichnet, dass** ein Oberflächenprofil mindestens eines Wäschestücks des angelieferten Wäschepostens ermittelt wird, mindestens anhand des Oberflächenprofils eine Stelle ermittelt wird, an der das Wäschestück von einem Erfassungsmittel erfasst werden kann und/oder soll und vom Erfassungsmittel gezielt diese Stelle des Wäschestücks erfasst wird.

2. Verfahren nach Anspruch 1, **dadurch gekennzeichnet, dass** das Erfassungsmittel mit mindestens einer schnellen Servoachse an die aus dem aufgenommenen Oberflächenprofil des Wäschestücks ermittelte Stelle des Wäschestücks herangefahren wird.

3. Verfahren nach Anspruch 1 oder 2, **dadurch gekennzeichnet, dass** aus dem aufgenommenen Oberflächenprofil des Wäschestücks die Position der zum Erfassen des Wäschestücks vorgesehenen oder geeigneten Stelle errechnet wird und diese Position vom Erfassungsmittel gezielt gesteuert angefahren wird, vorzugsweise auf kürzestem Weg.

4. Verfahren nach einem der vorhergehenden Ansprüche, **dadurch gekennzeichnet, dass** das Oberflächenprofil des jeweiligen Wäschestücks von mindestens einer Kamera (17, 18), vorzugsweise mehreren Kameras (17, 18), stereoskopisch aufgenommen wird.

5. Verfahren nach einem der vorhergehenden Ansprüche, **dadurch gekennzeichnet, dass** das anhand des aufgenommenen Oberflächenprofils an der vorgesehenen und/oder begünstigsten Stelle vom Erfassungsmittel erfassten Wäschestück aus dem Wäscheposten herausgezogen und dabei vereinzelt wird.

6. Verfahren nach einem der vorhergehenden Ansprüche, **dadurch gekennzeichnet, dass** das Wäschestück vorzugsweise nach dem Vereinzeln von einer bildgebenden Einrichtung bildhaft aufgenommen wird und aus dem so erhaltenen Abbild des Wäschestücks mindestens ein Sortierkriterium des Wäschestücks ermittelt bzw. abgeleitet wird.

7. Verfahren nach Anspruch 6, **dadurch gekennzeichnet, dass** vom Abbild des Wäschestücks die Gestalt, Größe, Struktur, Farbe und/oder Beschädigungen bzw. Flecken als Sortierkriterium abgeleitet werden.

8. Verfahren nach einem der vorhergehenden Ansprüche, **dadurch gekennzeichnet, dass** vor dem Transfer und/oder während des Transfers des Wäschestücks an ein Haltemittel des Transportsystems (13) das Wäschestück von der bildgebenden Einrichtung, insbesondere mindestens einer Kamera (17), bildhaft aufgenommen wird.

9. Verfahren nach Anspruch 8, **dadurch gekennzeichnet, dass** anhand des von der bildgebenden Einrichtung, insbesondere der mindestens einen Kamera (17), aufgenommenen Abbilds des Wäschestücks der Transfervorgang desselben an das Haltemittel des Transportsystems (13) gesteuert wird.

## Claims

1. A method for sorting laundry items, in particular dirty laundry items (10), wherein laundry items are taken individually from a delivered batch of laundry and the respective laundry item transferred to a transport system (13) which transports the laundry item to a sorting station where the laundry item is deposited by the transport system (13) at a dropping point which, on the basis of related information, corresponds to at least one sorting criterion of the laundry item, **characterized in that** a surface profile of at least one laundry item of the delivered batch of laundry is determined, that at least on the basis of the surface profile a location is determined at which the laundry item can and/or should be gripped by a gripping means and this location on the laundry item is gripped in a targeted manner by the gripping means.

2. The method as claimed in Claim 1, **characterized in that** the gripping means having at least one high-speed servo axis is moved toward the location on the laundry item that has been determined from the recorded surface profile of the laundry item.

3. The method as claimed in Claim 1 or 2, **characterized in that** the position of the intended or suitable location on the laundry item to be gripped is calculated from the recorded surface profile of the laundry item and that the gripping means is moved toward this position in a controlled and targeted manner, preferably along the shortest path.

4. The method as claimed in one of the preceding claims, **characterized in that** the surface profile of the respective laundry item is recorded stereoscopically by at least one camera (17, 18), preferably a plurality of cameras (17, 18).

5. The method as claimed in one of the preceding claims, **characterized in that** the laundry item, which is gripped by the gripping means at the intended and/or favourable location on the basis of the recorded surface profile, is pulled out of the batch of laundry and separated out in the process.

6. The method as claimed in one of the preceding claims, **characterized in that** the laundry item, preferably following its separation, is graphically recorded by an imaging device and the resulting image of the laundry item is used to determine or derive at least one sorting criterion of the laundry item.

7. The method as claimed in claim 6, **characterized in that** the shape, size, structure, colour and/or defects or stains are derived from the image of the laundry items as sorting criteria.

8. The method as claimed in one of the preceding claims, **characterized in that**, prior to the transfer and/or during the transfer of the laundry item to a fastening means of the transport system (13), the laundry item is graphically recorded by the imaging device, in particular by at least one camera (17).

9. The method as claimed in claim 8, **characterized in that** the transfer process of the laundry item to the retaining means of the transport system (13) is controlled on the basis of the image of the laundry item recorded by the imaging device, in particular by the at least one camera (17).

## Revendications

1. Procédé pour trier des pièces de linge, notamment des pièces de linge sale (10), dans lequel une pièce de linge délivrée depuis un poste de lavage est prélevée individuellement et la pièce de linge respective est transférée à un système de transport (13) qui transporte la pièce de linge vers une station de tri où la pièce de linge est délivrée par le système de transport (13) en un point de déversement correspondant à au moins un critère de tri de la pièce de linge sur la base d'informations associées, **caractérisé en ce qu'**un profil de surface d'au moins une pièce de linge du poste de lavage auquel la pièce de linge est livrée est déterminé, un point à l'emplacement duquel la pièce de linge peut et/ou doit être saisie par un moyen de saisie est déterminé au moins sur la base du profil de surface et ce point de la pièce de linge est saisie de manière ciblée par le moyen de saisie.

2. Procédé selon la revendication 1, **caractérisé en ce que** le moyen de saisie est amené à se rapprocher du point de la pièce de linge ayant été déterminé à partir du profil de surface acquis de la pièce de linge à l'aide d'au moins un axe d'asservissement rapide.

3. Procédé selon la revendication 1 ou 2, **caractérisé en ce que** la position du point qui est prévue ou appropriée pour saisir la pièce de linge est calculée à partir du profil de surface acquis de la pièce de linge et **en ce que** le moyen de saisie est amené à se rapprocher de ladite position en étant commandé de manière ciblée, de préférence sur le trajet le plus court.

4. Procédé selon l'une quelconque des revendications précédentes, **caractérisé en ce que** le profil de surface de la pièce de linge respective est acquis de manière stéréoscopique par au moins une caméra (17, 18), de préférence par plusieurs caméras (17, 18).

5. Procédé selon l'une quelconque des revendications précédentes, **caractérisé en ce que** la pièce de linge saisie par le moyen de saisie est extraite du poste de lavage et est ainsi isolée sur la base du profil de surface acquis au point prévu et/ou le plus favorable.

6. Procédé selon l'une quelconque des revendications précédentes, **caractérisé en ce que** la pièce de linge est de préférence acquise sous forme d'image par un dispositif générateur d'image après qu'elle a été isolée et **en ce qu'**au moins un critère de tri de la pièce de linge est déterminé ou déduit à partir de l'image ainsi obtenue.

7. Procédé selon la revendication 6, **caractérisé en ce que** la configuration, la taille, la structure, la couleur et/ou des endommagements ou des taches sont déterminés en tant que critère de tri.

8. Procédé selon l'une quelconque des revendications précédentes, **caractérisé en ce qu'**avant le transfert et/ou pendant le transfert de la pièce de linge à un moyen de support du système de transport (13), la pièce de linge est acquise sous forme d'image par le dispositif générateur d'image, notamment par au moins une caméra (17).

9. Procédé selon la revendication 8, **caractérisé en ce que**, sur la base de l'image de la pièce de linge acquise par le dispositif générateur d'image, notamment par l'au moins une caméra (17), le processus de transfert de ladite pièce de linge au moyen de support du système de transport (13) est commandé.
